# EUROPEAN PATENT SPECIFICATION

(11) **EP 1 890 977 B1**
(45) Date of publication and mention of the grant of the patent: **08.07.2009**
(21) Application number: 06743948.9
(22) Date of filing: 19.05.2006
(51) Int. Cl.: C03C 13/00, C03C 13/06

(54) **GLASS FIBRES**
GLASFASERN
FIBRES DE VERRE

(30) Priority: 14.06.2005 GB 0512112
(43) Date of publication of application: 27.02.2008
(73) Proprietor: THE MORGAN CRUCIBLE COMPANY PLC, Windsor, Berkshire SL4 1LP (GB)
(72) Inventor: JUBB, GARY ANTHONY, c/o Thermal Ceramics UK Ltd, Bromborough Wirral CH62 3PH (GB)
(74) Representative: Boff, James Charles
(86) International application number: PCT/GB2006/001867
(87) International publication number: WO 2006/134315

(56) References cited:
- EP-A- 1 338 575
- DE-U1- 20 203 963
- US-A- 2 308 857
- US-A- 3 853 569
- US-A- 4 510 252
- US-A- 5 945 360
- US-B1- 6 227 009

## Description

This invention relates to glass fibres and is particularly, although not exclusively, applicable to glass fibres for use as thermal insulation.

Glass fibres are a form of inorganic fibrous material. Inorganic fibrous materials are well known and widely used for many purposes (e.g. as thermal or acoustic insulation in bulk, mat, or blanket form, as vacuum formed shapes, as vacuum formed boards and papers, and as ropes, yarns or textiles; as a reinforcing fibre for building materials; as a constituent of brake blocks for vehicles). In most of these applications the properties for which inorganic fibrous materials are used require resistance to heat, and often resistance to aggressive chemical environments.

Inorganic fibrous materials can be either glassy or crystalline. Asbestos is an inorganic fibrous material one form of which has been strongly implicated in respiratory disease.

It is still not clear what the causative mechanism is that relates some asbestos with disease but some researchers believe that the mechanism is mechanical and size related. Asbestos of a critical size can pierce cells in the body and so, through long and repeated cell injury, have a bad effect on health. Whether this mechanism is true or not regulatory agencies have indicated a desire to categorise any inorganic fibre product that has a respiratory fraction as hazardous, regardless of whether there is any evidence to support such categorisation. Unfortunately for many of the applications for which inorganic fibres are used, there are no realistic substitutes.

Accordingly there is a demand for inorganic fibres that will pose as little risk as possible (if any) and for which there are objective grounds to believe them safe.

A line of study has proposed that if inorganic fibres were made that were sufficiently soluble in physiological fluids that their residence time in the human body was short; then damage would not occur or at least be minimised. As the risk of asbestos linked disease appears to depend very much on the length of exposure this idea appears reasonable. Asbestos is extremely insoluble.

As intercellular fluid is saline in nature the importance of fibre solubility in saline solution has long been recognised. If fibres are soluble in physiological saline solution then, provided the dissolved components are not toxic, the fibres should be safer than fibres which are not so soluble. The shorter the time a fibre is resident in the body the less damage it can do.

H. Förster in The behaviour of mineral fibres in physiological solutions' (Proceedings of 1982 WHO IARC Conference, Copenhagen, Volume 2, pages 27-55(1988)) discussed the behaviour of commercially produced mineral fibres in physiological saline solutions. Fibres of widely varying solubility were discussed.

International Patent Application No. WO89/12032 disclosed additional fibres soluble in saline solution and discusses some of the constituents that may be present in such fibres.

European Patent Application No. 0399320 disclosed glass fibres having a high physiological solubility.

Further patent specifications disclosing selection of fibres for their saline solubility include for example European 0412878 and 0459897, French 2662687 and 2662688, PCT WO86/04807, WO90/02713, WO92/09536, WO93/22251, WO94/15883, WO97/16386, United States 5250488, and WO03/059835.

The refractoriness of the fibres disclosed in these various prior art documents varies considerably and for these alkaline earth silicate materials the properties are critically dependent upon composition.

US 5332698 discloses glass fibres, comprising fibres having a length of from 5µ to 150 µm, an average diameter of ≤ 8µm and more than 10% of which have a diameter of ≤ 3µm, and wherein the glasses used for producing the fibres consist essentially of the following compounds in the proportions give in mol %:

| | |
|---|---|
| SiO₂ | 55-70% |
| B₂O₃ | 0-4% |
| Al₂O₃ | 0-1 % |
| TiO₂ | 0-6% |
| Iron oxides | 0-2% |
| MgO | 0-5% |
| CaO | 12-20% |
| Na₂O | 10-20% |
| K₂O | 0-5% |
| Fluoride | 0-2% |

These fibres were produced by a longitudinal blasting technique and their short length means that they would not be considered suitable for use as blanket or other thermal insulation.

EP0412878 discloses glass fibres comprising the following constituents in the proportions by weight:

| | |
|---|---|
| SiO₂ | 57 to 70% |
| Al₂O₃ | 0 to 5% |
| CaO | 5 to 9% |
| MgO | 0 to 5% |
| Na₂O + K₂O | 13 to 18% |
| B₂O₃ | 4 to 12% |
| F | 0 to 1.5% |
| P₂O₅ | 0 to 4% |
| Impurities | < 2% |

and containing more than 0.1% by weight phosphorous pentoxide when the percentage by weight of alumina is equal to or greater than 1%.

EP1338575 discloses the use of television tubes as cullet for use in the manufacture of glass fibre compositions for use in glass wool mouldings. These materials contain SrO and BaO and these components are used to replace boron oxide that the patent states is expensive.

EP1338575 states that such compositions should contain both 0.1 to 10% BaO and 0.1 to 25% SrO by weight to replace boron oxide. These components are stated to lower the glass viscosity and the liquid phase temperature. In contrast MgO is stated to raise the viscosity and CaO to raise the liquid phase temperature. EP1338575 states that if the minimum amount of either component BaO or SrO is not present, then neither the glass viscosity nor liquid phase temperatures is lowered.

US3853569 discloses glass compositions for use in forming glass fibres by centrifugal spinning and comprising 61 to 66.5% by weight SiO₂; 2 to 5% Al₂O₃; 0 to 1.5% F; 2 to 5% MgO; 1 to 5% B₂O₃; 0.1 to 2.75% BaO; 14 to 16% Na₂O + K₂O; 4 to 7.5% CaO; 0-2.5% ZrO₂; 0.2 to 1% Fe₂O₃.

US6227009 discloses glasses having the composition (in mol%) SiO₂ 66-69.7; Al₂O₃ 0-2.2; RO 7-18; R₂O 9-20; and B₂O₃ 0-7.1

JP63-147843 discloses a glass stated to be of good workability and having excellent chemical durability of composition (in weight percent):-

| | |
|---|---|
| SiO₂ | 63.0-67.0 |
| B₂O₃ | 4.0-4.8 |
| Al₂O₃ | 4.0-5.5 |
| TiO₂ | 0-4.0 |
| MgO | 2.5-3.6 |
| CaO | 4.7-8.7 |
| BaO | 0-5 |
| Na₂O | 7.5-13.9 |
| K₂O | 0-2.0 |
| [Na₂O+K₂O | 8.0-15.5] |
| Fe₂O₃ | 0-1.0 |
| ZrO₂ | 0-5.0 |

The amount of alumina in these materials would tend to result in low solubility and it is included to provide improved chemical durability and water resistance.

WO03/062164 discloses fibres containing SrO and BaO made form waste materials such as TV tubes. These fibres are stated to be of use in forming moulded bound products, but no indication is given of their suitability for forming fine fibres for insulation purposes.

WO03/076354 claims fibres comprising (in weight percent):-

| | |
|---|---|
| SiO₂ | 46.0-71.0 |
| Al₂O₃ | 9.0-26.0 |
| Na₂O | 0-5.80 |
| K₂O | 0 - 5.70 |
| CaO | 0.75 -10.0 |
| MgO | 1.80 -10.50 |
| FeO+Fe₂O₃ | 4.60 -15.50 |
| TiO₂ | 0.72 - 3.0 |
| MnO | 0 -6.0. |

These fibres are stated to provide high bum-through resistance for fire resistant blanket.

WO2005/033029 claims fibres comprising (in weight percent):-

| | |
|---|---|
| SiO₂ | 10.23 - 81.81 |
| Al₂O₃ | 2.0 - 25.91 |
| Na₂O | 0 -12.0 |
| K₂O | 0 - 6.0 |
| CaO | 3.0 -15.0 |
| MgO | 1.80 -10.50 |
| FeO+Fe₂O₃ | 1.0 -18.0 |
| TiO₂ | 0 - 4.0 |
| Li₂O | 0 - 9 |
| B₂O₃ | 0 - 9 |
| ZrO₂ | 0-5.0 |
| MnO | 0 - 6.0 |
| P₂O₅ | 0 - 4.0 |

for much the same purposes as WO03/076354.

The majority of fibres sold to the insulation market falls into one of two categories:-
- High temperature insulations (rated for use at >1000°C)
- Glass wool insulations (rated for use at <550°C)

High temperature insulations are generally made by forming a molten stream and forming fibre from that stream by either permitting it to contact a spinning wheel, or by using an air blast. These processes tend to result in the inclusion of "shot" [solidified particles of melt material] which while of use in some applications, tends to lower thermal conductivity. To produce such high performing materials relatively pure raw materials need to be used.

Glass wool insulations are generally made by forming a melt and forming a fibre from the melt either by a rotary process (in which the melt escapes through apertures in the circumference of a spinning cup and is blasted by hot gases to form the fibre) or by bushing methods (in which the glass is extruded through a fine aperture to form a filament and in which further treatment, e.g. flame attenuation in which the filament is passed through a flame, may be used to produce fine fibres). Such materials have little or no shot which results in a low thermal conductivity. However, the glass working characteristics required to form such materials tends to require compositions that have a low maximum continuous use temperature (e.g. less than 550°C). Because of the low maximum continuous use temperature, glass insulations can be made of relatively low cost raw materials and can incorporate many minor constituents dependent upon raw material source.

When moving from glass wool insulations to high temperature insulations the thermal conductivity increases because of the shot. This means that designers of products have to use a greater thickness of insulation when they design products for use above the maximum temperature of existing glass insulations than for products for use below the maximum temperature of existing glass insulations.

The applicant has realised that there is a market for shot free (or extremely low shot) insulations for use in the range of temperatures just above conventional glass wool insulations. As an example, in ovens, particularly domestic self-cleaning ovens, oven manufacturers are moving to higher temperatures for the oven cleaning cycle, beyond the capability of glass wool insulations. Since designers are seeking thinner insulating products so that they can reduce the overall size of the ovens while maintaining the size of the working part of the oven [or maintain the overall size and giving a higher working cavity of the oven] a switch to alkaline earth silicate fibres would be a challenge The requirements for thin insulation and higher temperature resistance are conflicting and new materials are required to meet this requirement. High temperature fibres can be "deshotted" to provide a low thermal conductivity material but this adds to cost. There are high temperature insulation fibres formed by sol-gel routes that are shot free, but these are even more expensive. The applicant has realised that by modifying the chemistry of high temperature insulations a range of insulations having higher use temperatures than glass wool insulations, and lower thermal conductivities than conventional high temperature insulations can be achieved.

Accordingly the present invention provides a glass fibre formable from a melt by a rotary process and having a diameter less than 5µm and comprising in weight percent:-

| | |
|---|---|
| SiO₂ | 62 to 75 wt% |
| Alkaline earth metal oxide | 13 to 25 wt% |
| Alkali metal oxide | 8 to 15wt % |
| B₂O₃ | 0 to 8 Wt% |
| M₂O₃ | 0.5 to 3 wt% in which M is Al, a transition element, a lanthanide, or a mixture thereof |

with these ingredients comprising greater than or equal to 90wt%, preferably greater than or equal to 95wt%, and less than or equal to 100 wt% of the glass composition.

Preferably the amount of SiO₂ is less than 70wt%, still more preferably less than 67wt% of the fibre composition.

Preferably the amount of SiO₂ is greater than 63wt% of the fibre composition.

Of the alkaline earth metal oxides:-
- preferably any MgO present is less than 4wt% of the fibre composition
- preferably SrO is present in an amount greater than 0.5wit%, more preferably greater than 3wt%
- still more preferably SrO is present in an amount less than 6wt%.

Preferably the amount of alkaline earth metal oxide is greater than 13wt%, more preferably less than 20wt%, still more preferably less than 16% of the fibre composition.

Preferably the amount of alkali metal oxide is greater than 9%, more preferably greater than 10wt% and still more preferably less than 13 wt%.

Preferably M₂O₃ is less than 2 wt%. Advantageously M₂O₃ comprises a transition metal oxide or lanthanide in an amount 0.25 to 1 wt%.

Other known glass components may be present, e.g. ZnO, P₂O₅ F.

A preferred composition comprises:-

| | |
|---|---|
| SiO₂ | 62 to 72 mol% |
| Alkaline earth metal oxide | 12 to 24 mol% |
| of which SrO | >0.5mol% |
| Alkali metal oxide | 10 to 15mol % |
| B₂O₃ | 3 to 7.5mol% |
| M₂O₃ | 0.25 to 1.5 mol% in which M is Al, a transition element, a lanthanide, or a mixture thereof |

with these ingredients comprising greater than or equal to 90 mol%, preferably greater than or equal to 95mol%, and less than or equal to 100 mol% of the glass composition.

The term "transition element" means an element whose atom has an incomplete d-sub-shell, or which gives rise to a cation or cations with an incomplete d-sub-shell. Such elements fall within groups 3 to 11 of the periodic table. The first transition series of elements includes Sc, Ti, V, Cr, Mn, Fe, Co, Ni and Cu; the second and third transition series are similarly derived and include Y, Zr, Nb, Mo, Tc, Ru, Rh, Pd, Ag; La, Hf, Ta, W, Re, Os, Ir, Pt, and Au.

The term "lanthanide" strictly means the 14 elements that follow lanthanum in the periodic table [Ce, Pr, Nd, Pm, Sm, Eu, Gd, Tb, Dy, Ho, Er, Tm, Yb, and Lu] but is habitually used to include lanthanum as well.

In the present specification the terms "transition element" and "lanthanide" is to be taken to be restricted to such elements as can form compounds of the formula M₂O₃.

Further features of the invention will be apparent from the claims in the light of the following description in the light of the drawings in which:-
Fig. 1 plots blanket shrinkage for several fibre compositions
Fig. 2 plots thermal conductivity for several fibre compositions.

A typical method of making fibres according to the invention is to use a rotary spinner having 250-300 micron holes in its periphery. Melt is either made in the spinner or passed to the spinner where it passes through the holes to form filaments. Hot gas from a flame draws these filaments down to the fine fibres (<5µm, preferably 2-4µm diameter) preferred for insulation.

Rotary spinning in this fashion is well known and spinners are of various types [e.g. Saint-Gobain, Johns-Manville, Owens Corning types] as is well known in the art. The present invention is not limited to any particular spinner construction.

To achieve a high maximum continuous use temperature it is important to have a high silica level. Amounts lower than 62wt% tend to result in a low maximum continuous use temperature. Amounts greater than 75wt% increase the temperature and viscosity of the melt and this can result in uneconomic wear of the spinner and/or the need to use more expensive materials in the spinner and associated apparatus. SiO₂ is the cheapest component and the primary determinant of the viscosity of the melt.

Use of low or zero MgO gives a viscosity minimum thus allowing the use of higher SiO₂ values.

Alkaline earth oxides give increased refractoriness in comparison with alkali metal oxides.

CaO and SrO give increased refractoriness in comparison with MgO, and SrO appears to give higher refractoriness than CaO. BaO is assumed to give higher refractoriness still. The cost and difficulty in handling SrO and BaO means that any present should preferably be used in small quantities.

Solubility is maximised by the high alkaline earth metal oxides. These species create double the amount of non-bonding oxygens (NBOs) in comparison with alkali metal oxides which create single NBOs. The alkaline earth metal oxides thus disrupt the glass network more and makes dissolution easier. However they also make the compositions more prone to crystallisation, as the glass is then less stable.

The alkali metal oxides and B₂O₃ balance in part the tendency to crystallise at fiberisation and spinner temperatures (950° to 1050°C). However, too much of these components results in low maximum continuous use temperatures.

M₂O₃ disrupts the glass network and so helps to reduce crystallisation, without unduly affecting maximum continuous use temperature. However, too much reduces biosolubility.

Preferably the M₂O₃ comprises some transition metal and/or lanthanide elements as these interact well with the heat of the flame during attenuation of the fibre. The applicants surmise that transition metal and lanthanide elements absorb infrared radiation better than Al₂O₃. The increased interaction results in the filaments remaining workable for longer and so resulting in improved attenuation and lessened risk of crystallisation. The applicants also note that for best fibre properties, any iron present should preferably be in the form of Fe³⁺ rather than Fe²⁺ and where both are present the Fe³⁺ should preferably predominate.

The effect of M₂O₃ is very marked. In a trial of rotary forming fibres of a pair of compositions (one with and one without M₂O₃) the material with M₂O₃ in the claimed range remained workable for the entire length of the trial whereas that without M₂O₃ in the claimed range crystallised within the cup within 6 hours, leading to a reduction in fibre formation as the apertures in the spinner were progressively blocked by crystallised material.

For rotary forming these compositions, viscosity should be around 1000 poise between 1050-1100°C. It is between 1070-1080°C for the compositions given below as examples 1 and 2. The glass should not crystallise in the rotary spinner. Some compositions can crystallise in a relatively short period (e.g. 2-3 hour) whereas others will last several days at the cup temperature {950°C to 1050°C).

For different forming methods different viscosities of the melt will be appropriate and processing conditions and chemical compositions should take this into account utilising the teachings above to provide the best composition within the claimed range for the forming method chosen.

The applicants have examined many compositions for suitability for rotary forming by forming melts within the above stated range as indicated in the target compositions set out in Table 1

| Table 1 | | | | | | |
|---|---|---|---|---|---|---|
| | Target compositions - wt% | | | | | |
| Component | A | B | 44 | 45 | 46 | 47 |
| SiO₂ | 64% | 66% | 66.25% | 66.25% | 66.25% | 66.25% |
| MgO | 3% | 3% | 0% | 0% | 0% | 0% |
| CaO | 13% | 8% | 11% | 10.5% | 10.25% | 9.75% |
| SrO | 4% | 4% | 4% | 4% | 4% | 4% |
| Na₂O | 11% | 11% | 12% | 12% | 12% | 12% |
| B₂O₃ | 4% | 7% | 6% | 6% | 6% | 6% |
| Al₂O₃ | 0.75% | 0.75% | 0.75% | 0.75% | 1.5% | 1.5% |
| Fe₂O₃ | 0.25% | 0.25% | 0% | 0.5% | 0% | 0.5% |

Composition A formed fibres but appeared liable to crystallisation in the spinner.

Composition B formed fibres and was resistant to crystallisation over four days in the spinner.

To test the propensity to crystallise melts were formed and held at a temperature of 950° and examined for crystallisation..

Composition 44 began crystallising around 1-2 days.

Composition 45 and 46 were similar and lasted 4-6 days.

Composition 47 proved to be the best of these compositions and lasted 10-12 days.

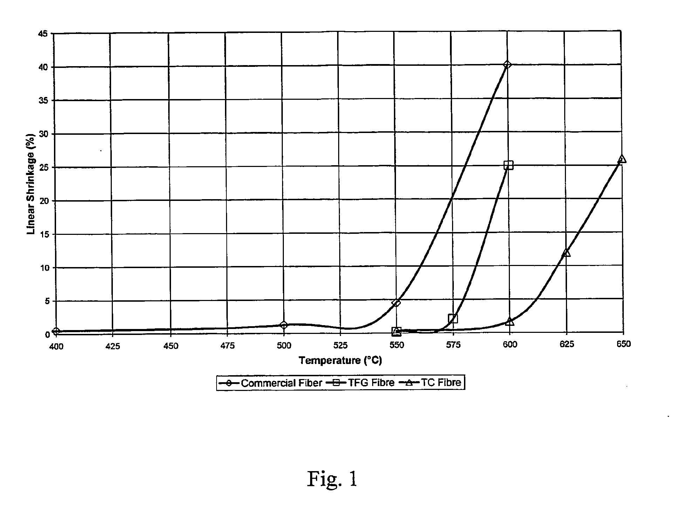

Fig. 1 shows the percent linear shrinkage of a commercially available insulation blanket v materials as presently claimed. Analysed compositions [XRF for all components except **B₂O₃** - B₂O₃ by inductively coupled plasma atomic absorption] and linear shrinkages of the materials are shown in Table 2.

Shrinkage was measured by cutting two pieces of blanket, a base piece 15cm x 20cm and a test piece 12cm x 18cm, both with the longest length lying along the direction of the roll of blanket. The base piece was placed on a base board of a material determined not to react with the blanket material. The base piece was gently pressed flat and then the test piece was placed on and in the middle of the base piece and pressed flat. Four platinum pins (0.5mm) were then inserted into the blanket at the four corners of the blanket [separations of 100 mm and 45 mm]

The longest lengths (L1 & L2) and the diagonals (L3 & L4) were measured to an accuracy of ±5µm using a travelling microscope. The samples were placed in a furnace and ramped to a temperature 50°C below the test temperature at 300°C/hour and ramped at 120°C/hour for the last 50°C to test temperature and left for 24 hours at temperature. After cooling to room temperature, the L1, L2, L3, and L4 values were measured and the shrinkage along each length calculated with the shrinkage being expressed as an average of the 4 measurements.

As can be seen, the commercially available blanket starts to increase in shrinkage between about 525°C and 550°C, having a shrinkage of 5% at ∼550°C. In contrast, the fibres referred to as TFG and TC commence increasing in shrinkage at higher temperatures.

TFG commences increasing in shrinkage between 550°C and 575°C, with shrinkage of 5% at ∼580°C.

TC commences increasing in shrinkage between 575°C and 600°C, with shrinkage of 5% at ∼610°C.

The difference in shrinkage at 600°C is particularly noticeable.

| Table. 2 | | | |
|---|---|---|---|
| | Commercially available blanket | TFG | TC |
| | Composition wt% | | |
| SiO₂ | 64.4 | 62 | 63.56 |
| MgO | 2.4-2.42 | 2.9 | 3.46 |
| CaO | 7.8-7.99 | 13 | 13.41 |
| SrO | 0-0.12 | 3.8 | 3.6 |
| BaO | 0-0.31 | | 0.02 |
| Na₂O | 15.2-15.8 | 12 | 10.25 |
| K₂O | 0.61-0.69 | 0.6 | 0.12 |
| Al₂O₃ | 1.71-1.79 | 1.4 | 1.02 |
| B₂O₃ | 4.86-4.91 | 4 | 3.5 |
| Fe₂O₃ | 0.55-0.57 | 0.3 | 0.26 |
| P₂O₅ | 0.13 | | |
| ZrO₂ | | | 0.1 |
| TiO₂ | 0.07-0.12 | | 0.02 |
| | | | |

| Temperature °C | Linear Shrinkage % | | |
|---|---|---|---|
| 300 | 0.21 | | |
| 400 | 0.5 | | |
| 500 | 1.258 | | |
| 550 | 4.5 | 0.18 | 0.3 |
| 575 | | 2.1 | |
| 600 | 40 | 25 | 1.7 |
| 625 | | | 12 |
| 650 | | | 26 |

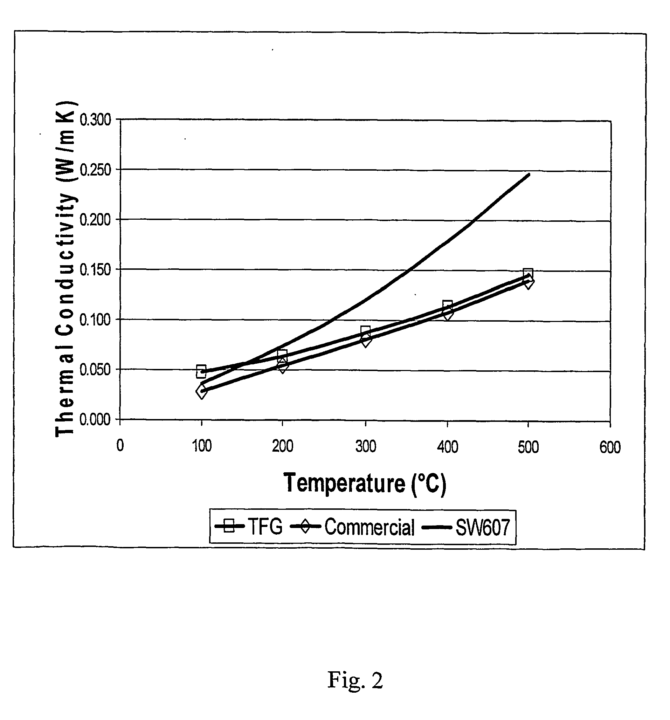

The applicants have measured thermal conductivity on blankets having a density of ∼50kg/m³ and found that blankets formed from the fibres of the present invention have thermal conductivities very similar to those of conventional blankets [see Fig. 2 in which TFG refers to the same material as in Table 2, Commercial blanket has the same meaning as in Table 2, and SW607 is a conventional high temperature alkaline earth silicate fibre]. The higher thermal conductivity of the alkaline earth silicate fibre blanket is due to the presence of shot (unfiberised material).

As a further proof of concept the applicants prepared on an experimental melt rig fibres having the compositions set out in Table 3. Samples of these fibres were made into vacuum preforms, using 75g of fibre in 500cm³ of 0.2% starch solution, into a 120 x 65mm tool. Platinum pins (approximately 0.1-0.3mm diameter) were placed 100 x 45mm apart in the 4 corners. The firing regime and calculation of shrinkage was then performed in the same manner as et out above for the blanket. These tests demonstrated the shrinkages shown in Table 3 again indicating good performance at temperatures of 600°C with some materials showing good shrinkage at temperatures of 650°C.

| Table 3 | | | | | | |
|---|---|---|---|---|---|---|
| | Compositions | | | | | |
| | **#956** | **#957** | **#958** | **#959** | **#960** | **#961** |
| SiO₂ | 66.84 | 66.38 | 66.69 | 66.63 | 66.61 | 66.05 |
| MgO | 0.24 | 0.24 | 3.40 | 0.28 | 0.32 | 0.20 |
| CaO | 12.01 | 12.16 | 9.08 | 14.08 | 16.03 | 10.13 |
| SrO | 4.21 | 4.44 | 4.53 | 2.21 | 0.04 | 6.09 |
| Na₂O | 10.20 | 9.19 | 9.01 | 9.36 | 9.41 | 9.34 |
| K₂O | 0.06 | 0.06 | 0.06 | 0.06 | 0.06 | 0.06 |
| Al₂O₃ | 0.82 | 1.60 | 1.60 | 1.52 | 1.48 | 1.60 |
| B₂O₃ | 5.3 | 5.3 | 5.4 | 5.6 | 5.7 | 5.5 |
| Fe₂O₃ | 0.06 | 0.62 | 0.72 | 0.60 | 0.58 | 0.56 |
| Cr₂O₃ | 0.00 | 0.00 | 0.00 | 0.00 | 0.00 | 0.00 |
| P₂O₅ | 0.00 | 0.00 | 0.00 | 0.00 | 0.00 | 0.00 |
| TiO₂ | 0.10 | 0.10 | 0.12 | 0.10 | 0.10 | 0.10 |

| Temperature°C | Linear shrinkage of vacuum preform | | | | | |
|---|---|---|---|---|---|---|
| 500 | 0.66 | 0.33 | 0.74 | 0.75 | 0.55 | 0.64 |
| 550 | 0.66 | | 0.78 | 0.82 | 0.63 | 0.68 |
| 600 | 0.46 | | 1.22 | 0.8 | 0.61 | 0.51 |
| 625 | | | 4.28 | 2.15 | 2.25 | 2.35 |
| 650 | 2.88 | 1.63 | 28.20 | 19.74 | 9.22 | 5.75 |
| 675 | 36.6 | 29.1 | | | | |

Compositions #956 and #957 indicate that replacing some of the Na₂O with more Al₂O₃ and Fe₂O₃ results in an improved shrinkage at 650°C.

Composition #958 indicates that replacing CaO with MgO is detrimental to shrinkage at 650°C. The applicants postulate that the lowered viscosity observed also reduces softening point. These fibres fail at or around their softening point. They don't 'melt' but flow to reduce their surface energy. Softening point is the temperature where viscosity is 10^{7.6} poise. Around this point energy barrier for flow equals thermal energy available and glass can flow by diffusion.

Compositions #960, #959, #957, #961 seem to indicate that levels of SrO in amounts >∼3wt% give best results for shrinkage.

Low levels of SrO disrupt the glass to make ordering difficult. Higher levels allow system to start becoming more ordered again as there is a SrO.CaO.SiO₂ eutectic.
The applicants have trialled these compositions on production level facilities to ensure that scale effects did not affect their findings. As expected the composition 47 worked very well with no crystallisation problems. Composition 44 did crystallise in the spinner in a short time. The alumina and iron oxide additions made a huge difference to the crystallisation properties. Fibre formed could be needled to form blanket very easily.

The best composition found in these production level trials had the analysed composition:-

| | |
|---|---|
| SiO₂ | 67.21 |
| MgO | 0.13 |
| CaO | 12.52 |
| SrO | 3.84 |
| Na₂O | 8.89 |
| K₂O | 0.10 |
| Al₂O₃ | 1.80 |
| B₂O₃ | 5.1 |
| Fe₂O₃ | 0.43 |
| ZrO₂ | 0.10 |

and as a preferred composition the applicants propose:-

| | |
|---|---|
| SiO₂ | 67 ± 2 |
| MgO | <2 |
| CaO | 12 ± 1 |
| SrO | 4 ± 2 |
| Na₂O | 10 ± 2 |
| K₂O | 0-7 |
| Al₂O₃ | 0-3 |
| B₂O₃ | 5 ± 1 |
| Fe₂O₃ | 0 - 3 |

with these named ingredients comprising greater than or equal to 90wt% and less than or equal to 100 wt% of the glass composition. Preferred are compositions in which Al₂O₃ >0.5wt% and Fe₂O₃ > 0.25wt%

Preferred are compositions comprising

| | |
|---|---|
| SiO₂ | 62 to 72 mol% |
| Alkaline earth metal oxide | 12 to 24 mol% |
| of which SrO | >0.5mol% |
| Alkali metal oxide | 10 to 15mol % |
| B₂O₃ | 3 to 7.5mol% |
| M₂O₃ | 0.25 to 1.5 mol% in which M is Al, a transition element, a lanthanide, or a mixture thereof |

with these ingredients comprising greater than or equal to 90 mol%, preferably greater than or equal to 95mol%, and less than or equal to 100 mol% of the glass composition.

Accordingly, the materials claimed provide blankets having superior temperature resistance to conventional glass wools, and superior insulating performance (i.e. lower thermal conductivity) than an alkaline earth silicate fibre. The fibres concerned have good saline (physiological) solubility.

## Claims

1. A glass fibre formable from a melt by a rotary process and having a diameter less than 5µm and comprising in weight percent:-
| | |
|---|---|
| SiO₂ | 62 to 75 wt% |
| Alkaline earth metal oxide | 13 to 25 wt% |
| Alkali metal oxide | 8 to 15wt % |
| B₂O₃ | 0 to 8 wt% |
| M₂O₃ | 0.5 to 3 wt% in which M is Al, a transition element, a lanthanide, or a mixture thereof |
with these named ingredients comprising greater than or equal to 90wt% and less than or equal to 100 wt% of the glass composition

2. A glass fibre, as claimed in Claim 1, in which the named ingredients comprise greater than or equal to 95wt% of the glass composition.

3. A glass fibre, as claimed in any one of Claims 1 to 2, in which the amount of SiO₂ is greater than or equal to 63wt%.

4. A glass fibre, as claimed in any one of Claims 1 to 3, in which the amount of SiO₂ is less than or equal to 70wt%

5. A glass fibre, as claimed in Claim 4, in which the amount of SiO₂ is less than or equal to 67wt%.

6. A glass fibre, as claimed in any one of Claims 1 to 5, in which the amount of alkaline earth metal oxide is less than or equal to 20wt%

7. A glass fibre, as claimed in Claim 6, in which the amount of alkaline earth metal oxide is less than or equal to 16wt%.

8. A glass fibre, as claimed in any one of Claims 1 to 7, in which the alkaline earth metal oxide comprises MgO in an amount less than 4wt% of the fibre composition.

9. A glass fibre, as claimed in any one of Claims 1 to 8, in which the alkaline earth metal oxide comprises SrO in an amount less than 6wt% of the fibre composition.

10. A glass fibre, as claimed in any one of Claims 1 to 9, in which the alkaline earth metal oxide comprises SrO in an amount greater than 0.5 wt% of the fibre composition.

11. A glass fibre, as claimed in Claim 10, in which the alkaline earth metal oxide comprises SrO in an amount greater than 3 wt% of the fibre composition.

12. A glass fibre, as claimed in any one of Claims 1 to 11, in which the amount of alkali metal oxide is greater than or equal to 9wt%.

13. A glass fibre, as claimed in Claim 12, in which the amount of alkali metal oxide is less than or equal to 13wt%

14. A glass fibre, as claimed in any one of Claims 1 to 13, in which M₂O₃ comprises a transition metal oxide or lanthanide oxide in an amount 0.25 to 1 wt%.

15. A glass fibre, as claimed in any one of Claims 1 to 14, having the composition in wt%:-
| | |
|---|---|
| SiO₂ | 67 ± 2 |
| MgO | <2 |
| CaO | 12 ± 1 |
| SrO | 4 ± 2 |
| Na₂O | 10 ± 2 |
| K₂O | 0-7 |
| Al₂O₃ | 0-3 |
| B₂O₃ | 5 ± 1 |
| Fe₂O₃ | 0-3 |
with these named ingredients comprising greater than or equal to 90wt% and less than or equal to 100 wt% of the glass composition.

16. A glass fibre, as claimed in Claim 15, in which Al₂O₃ >0.5wt% and Fe₂O₃ > 0.25wt%

17. A glass fibre, as claimed in any one of Claims 1 to 16, having the composition:-
| | |
|---|---|
| SiO₂ | 62 to 72 mol% |
| Alkaline earth metal oxide | 12 to 24 mol% |
| of which SrO | >0.5mol% |
| Alkali metal oxide | 10 to 15mol % |
| B₂O₃ | 3 to 7.5mol% |
| M₂O₃ | 0.25 to 1.5 mol% in which M is Al, a transition element, a lanthanide, or a mixture thereof |
with these ingredients comprising greater than or equal to 90 mol%, preferably greater than or equal to 95mol%, and less than or equal to 100 mol% of the glass composition.

18. A glass fibre as claimed in any preceding claim for which a vacuum preform as specified has a shrinkage of less than 5% when exposed to 600°C for 24 hours.

19. Thermal insulation comprising glass fibres as claimed in any preceding claim.

20. Thermal insulation, as claimed in Claim 19, in which the thermal insulation is in the form of a blanket.

21. Thermal insulation, as claimed in Claim 20, in which the blanket is in the form of a needled fleece.

22. Thermal insulation, as claimed in Claim 21, in which the blanket has a shrinkage of less than 5% when exposed to 575°C for 24 hours.

23. Thermal insulation, as claimed in Claim 22, in which the blanket has a shrinkage of less than 5% when exposed to 600°C for 24 hours.

24. Thermal insulation, as claimed in any one of Claims 19 to 24, in which the thermal insulation comprises an assembly of the glass fibres encased in a sheath to prevent loss of fibres from the assembly.

25. An oven incorporating thermal insulation as claimed in any one of Claims 19 to 24

## Patentansprüche

1. Eine Glasfaser, die durch ein Rotationsverfahren aus einer Schmelze formbar ist und einen Durchmesser von weniger als 5 µm aufweist, enthaltend in Gewichtsprozent
62 bis 75 Gew.-% SiO₂
13 bis 25 Gew.-% Erdalkalimetalloxid
8 bis 15 Gew.-% Alkalimetalloxid
0 bis 8 Gew.-% B₂O₃
0,5 bis 3 Gew.-% M₂O₃, wobei M Al, ein Übergangselement, ein Lanthanid oder eine Mischung davon darstellt,
wobei die bezeichneten Bestandteile 90 Gew.-% bis 100 Gew.% der Glaszusammensetzung darstellen.

2. Eine Glasfaser gemäß Anspruch 1, wobei die bezeichneten Bestandteile 95 Gew.-% oder mehr der Glaszusammensetzung darstellen.

3. Eine Glasfaser gemäß Anspruch 1 oder 2, wobei der Gehalt an SiO₂ 63 Gew.-% oder mehr beträgt.

4. Eine Glasfaser gemäß irgend einem der Ansprüche 1 bis 3, wobei der Gehalt an SiO₂ 70 Gew.-% oder weniger beträgt.

5. Eine Glasfaser gemäß Anspruch 4, wobei der Gehalt an SiO₂ 67 Gew.-% oder weniger beträgt.

6. Eine Glasfaser gemäß irgend einem der Ansprüche 1 bis 5, wobei der Gehalt an Erdalkalimetalloxid 20 Gew.-% oder weniger beträgt.

7. Eine Glasfaser gemäß Anspruch 6, wobei der Gehalt an Erdalkalimetalloxid 16 Gew.-% oder weniger beträgt.

8. Eine Glasfaser gemäß irgend einem der Ansprüche 1 bis 7, wobei das Erdalkalimetalloxid MgO mit einem Gehalt von weniger als 4 Gew.-% der Glasfaserzusammensetzung enthält.

9. Eine Glasfaser gemäß irgend einem der Ansprüche 1 bis 8, wobei das Erdalkalimetalloxid SrO mit einem Gehalt von weniger als 6 Gew.-% der Glasfaserzusammensetzung enthält.

10. Eine Glasfaser gemäß irgend einem der Ansprüche 1 bis 9, wobei das Erdalkalimetalloxid SrO mit einem Gehalt von mehr als 0,5 Gew.-% der Glasfaserzusammensetzung enthält.

11. Eine Glasfaser gemäß Anspruch 10, wobei das Erdalkalimetalloxid SrO mit einem Gehalt von mehr als 3 Gew.-% der Glasfaserzusammensetzung enthält.

12. Eine Glasfaser gemäß irgend einem der Ansprüche 1 bis 11, wobei der Gehalt an Alkalimetalloxid 9 Gew.-% oder mehr beträgt.

13. Eine Glasfaser gemäß Anspruch 12, wobei der Gehalt an Alkalimetalloxid 13 Gew.-% oder weniger beträgt.

14. Eine Glasfaser gemäß irgend einem der Ansprüche 1 bis 13, wobei M₂O₃ ein Oxid eines Übergangsmetalls oder ein Oxid eines Lanthanids mit einem Gehalt von 0,25 bis 1 Gew.-% enthält.

15. Eine Glasfaser gemäß irgend einem der Ansprüche 1 bis 14, mit der Zusammensetzung in Gew.-%:
| | |
|---|---|
| SiO₂ | 67 ± 2 |
| MgO | <2 |
| CaO | 12 ± 1 |
| SrO | 4 ± 2 |
| Na₂O | 10 ± 2 |
| K₂O | 0-7 |
| Al₂O₃ | 0-3 |
| B₂O₃ | 5 ± 1 |
| Fe₂O₃ | 0-3 |
wobei die bezeichneten Bestandteile 90 Gew.-% bis 100 Gew.% der Glaszusammensetzung darstellen.

16. Eine Glasfaser gemäß Anspruch 15, wobei der Gehalt an Al₂O₃ größer als 0,5 Gew.-% und der Gehalt an Fe₂O₃ größer als 0,25 Gew.-% ist.

17. Eine Glasfaser gemäß irgend einem der Ansprüche 1 bis 16, mit der Zusammensetzung
62 bis 75 mol% SiO₂;
12 bis 24 mol% Erdalkalimetalloxid, wovon SrO größer als 0,5 mol% ist;
10 bis 15 mol% Alkalimetalloxid;
3 bis 7,5 mol% B₂O_{3;}
0,25 bis 1,5 mol% M₂O₃, wobei M Al, ein Übergangselement, ein Lanthanid oder eine Mischung davon darstellt,
wobei die bezeichneten Bestandteile 90 mol% oder mehr, vorzugsweise 95 mol% oder mehr und 100 mol% oder weniger der Glaszusammensetzung darstellen.

18. Eine Glasfaser gemäß irgend einem vorhergehenden Anspruch für die eine Vakuumvorform wie spezifiziert eine Schrumpfung von weniger als 5% aufweist wenn diese bei einer Temperatur von 600°C für 24 Stunden ausgesetzt wird.

19. Eine thermische Isolierung umfassend Glasfasern gemäß irgend einem vorhergehenden Anspruch.

20. Eine thermische Isolierung gemäß Anspruch 19, wobei die thermische Isolierung in Form einer Decke vorliegt.

21. Eine thermische Isolierung gemäß Anspruch 20, wobei die Decke als genadeltes Vlies vorliegt.

22. Eine thermische Isolierung gemäß Anspruch 21, wobei die Decke eine Schrumpfung von weniger als 5% aufweist, wenn diese bei einer Temperatur von 575°C für 24 Stunden ausgesetzt wird.

23. Eine thermische Isolierung gemäß Anspruch 22, wobei die Decke eine Schrumpfung von weniger als 5% aufweist, wenn diese bei einer Temperatur von 600°C für 24 Stunden ausgesetzt wird.

24. Eine thermische Isolierung gemäß irgend einem der Ansprüche 19 bis 24,
wobei die thermische Isolierung einen Aufbau von in einer Hülle eingeschlossenen Glasfasern umfasst, um einen Verlust von Fasern aus dem Aufbau zu verhindern.

25. Einen Ofen enthaltend eine thermische Isolierung gemäß irgend einem der Ansprüche 19 bis 24.

## Revendications

1. Fibre de verre formée à partir d'une masse fondue par un procédé rotatif et ayant un diamètre inférieur à 5 µm et comprenant en pour cent en poids .
| | |
|---|---|
| SiO₂ | 62 à 75 % en poids |
| Oxyde de métal alcalino-terreux | 13 à 25 % en poids |
| Oxyde de métal alcalin | 8 à 15 % en poids |
| B₂O₃ | 0 à 8 % en poids |
| M₂O₃ | 0,5 à 3 % en poids, où M représente Al, un élément de transition, un lanthanide ou un de leurs mélanges ; |
les ingrédients cités comprenant 90 % en poids ou plus et 100 % en poids ou moins de la composition de verre.

2. Fibre de verre selon la revendication 1, dans laquelle les ingrédients cités comprennent 95 % en poids ou plus de la composition de verre.

3. Fibre de verre selon l'une quelconque des revendications 1 à 2, dans laquelle la quantité de SiO₂ est supérieure ou égale à 63 % en poids.

4. Fibre de verre selon l'une quelconque des revendications 1 à 3, dans laquelle la quantité de SiO₂ est inférieure ou égale à 70 % en poids.

5. Fibre de verre, selon la revendication 4, dans laquelle la quantité de SiO₂ est inférieure ou égale à 67 % en poids.

6. Fibre de verre selon l'une quelconque des revendications 1 à 5, dans laquelle la quantité d'oxyde de métal alcalinoterreux est inférieure ou égale à 20 % en poids.

7. Fibre de verre selon la revendication 6, dans laquelle la quantité d'oxyde de métal alcalinoterreux est inférieure ou égale à 16 % en poids.

8. Fibre de verre selon l'une quelconque des revendications 1 à 7, dans laquelle l'oxyde de métal alcalinoterreux comprend du MgO en quantité inférieure ou égale à 4 % en poids de la composition de la fibre.

9. Fibre de verre selon l'une quelconque des revendications 1 à 8, dans laquelle l'oxyde de métal alcalinoterreux comprend du SrO en quantité inférieure à 6 % en poids de la composition de la fibre.

10. Fibre de verre selon l'une quelconque des revendications 1 à 9, dans laquelle l'oxyde de métal alcalinoterreux comprend du SrO en quantité supérieure à 0,5 % en poids de la composition de la fibre.

11. Fibre de verre selon la revendication 10, dans laquelle l'oxyde de métal alcalinoterreux comprend du SrO en quantité supérieure à 3 % en poids de la composition de la fibre.

12. Fibre de verre selon l'une quelconque des revendications 1 à 11, dans laquelle la quantité d'oxyde de métal alcalin est supérieure ou égale à 9 % en poids.

13. Fibre de verre selon la revendication 12, dans laquelle la quantité d'oxyde de métal alcalin est inférieure ou égale à 13 % en poids.

14. Fibre de verre selon l'une quelconque des revendications 1 à 13, dans laquelle M₂O₃ comprend un oxyde de métal de transition ou un oxyde de lanthanide en quantité de 0,25 à 1 % en poids.

15. Fibre de verre selon l'une quelconque des revendications 1 à 14, ayant la composition en % en poids :
| | |
|---|---|
| SiO₂ | 67 ± 2 |
| MgO | <2 |
| CaO | 12 ± 1 |
| SrO | 4 ± 2 |
| Na₂O | 10 ± 2 |
| K₂O | 0 - 7 |
| Al₂O₃ | 0 - 3 |
| B₂O₃ | 5 ± 1 |
| Fe₂O₃ | 0 - 3 |
les ingrédients cités comprenant 90 % en poids ou plus et 100 % en poids ou moins de composition de verre.

16. Fibre de verre selon la revendication 15, dans laquelle Al₂O₃ > 0,5 % en poids et Fe₂O₃ > 0,25 % en poids.

17. Fibre de verre selon l'une quelconque des revendications 1 à 16, ayant la composition suivants :
| | |
|---|---|
| SiO₂ | 62 à 72 % en mole |
| Oxyde de métal alcalino-terreux | 12 à 24 % en mole |
| dont SrO | >0,5 % en mole |
| Oxyde de métal alcalin | 10 à 15 % en mole |
| B₂O₃ | 3 à 7,5 % en mole |
| M₂O₃ | 0,25 à 1,5 % en mole, où M représente Al, un élément de transition, un lanthanide ou un de leurs mélange, |
ces ingrédients comprenant 90 % en mole ou plus, de préférence 95 % en mole ou plus et 100 % en mole ou moins de la composition de verre.

18. Fibre de verre selon l'une quelconque des revendications précédentes, dans laquelle une ébauche sous vide, telle que spécifiée, se rétracte de moins de 5 % lorsqu'elle est exposée à 600 °C pendant 24 heures.

19. Isolation thermique comprenant des fibres de verre selon l'une quelconque des revendications précédentes.

20. Isolation thermique selon la revendication 19, dans laquelle l'isolation thermique se présente sous la forme d'une couverture.

21. Isolation thermique selon la revendication 20, dans laquelle la couverture se présente sous la forme d'une nappe aiguilletée.

22. Isolation thermique selon la revendication 21, dans laquelle la couverture se rétracte de moins de 5 % lorsqu'elle est exposée à 575 °C pendant 24 heures.

23. Isolation thermique selon la revendication 22, dans laquelle la couverture se rétracte de moins de 5 % lorsqu'elle est exposée à 600 °C pendant 24 heures.

24. Isolation thermique selon l'une quelconque des revendications 19 à 24, dans laquelle l'isolation thermique comprend un ensemble des fibres de verre inséré dans une gaine pour empêcher une perte de fibres de l'ensemble.

25. Four comprenant une isolation thermique selon l'une quelconque des revendications 19 à 24.
